# FASCICULE DE BREVET EUROPEEN

(11) **EP 4 330 583 B1**
(45) Date de publication et mention de la délivrance du brevet: **21.01.2026**
(21) Numéro de dépôt: 22724484.5
(22) Date de dépôt: 22.04.2022
(51) Int. Cl.: F16L 9/22, F16L 43/00

(54) **DISPOSITIF DE RACCORDEMENT COUDE MULTI-ANGLES**
VERBINDUNGSVORRICHTUNG MIT MEHRFACHWINKEL
CONNECTION DEVICE BENT AT MULTIPLE ANGLES

(30) Priorité: 25.04.2021 FR 2104274; 21.10.2021 FR 2111225; 14.04.2022 FR 2203473
(43) Date de publication de la demande: 06.03.2024
(60) Demande divisionnaire: 25219698.5
(73) Titulaire: Ribon, Benoit, 30150 Roquemaure (FR)
(72) Inventeur: Ribon, Benoit, 30150 Roquemaure (FR)
(86) Numéro de dépôt international: PCT/IB2022/053789
(87) Numéro de publication internationale: WO 2022/229811

(56) Documents cités:
- WO-A1-2015/196249
- DE-A1- 3 901 618
- DE-C- 815 740
- KR-A- 20130 133 406

## Description

### Domaine technique

L'invention concerne le domaine du transport de fluides, liquides ou gaz, ou de solides de type filaire, notamment dans l'industrie du bâtiment et des travaux publics, plus particulièrement pour la création et le raccordement de réseaux. L'invention concerne plus particulièrement un dispositif de raccordement.

### Technique antérieure

Il existe des dispositifs de raccordement flexibles sous forme de multicoude en matériau flexible, notamment tels que décrits dans la demande de brevet EP0913611 ou DE815740C qui décrivent un dispositif de raccord pour tuyaux en matière plastique comportant au moins deux manchons destinés à être emmanchés chacun sur une extrémité des tuyaux à raccorder, et reliés par au moins une partie intermédiaire flexible, mais ces dispositifs ne sont pas adaptés à toutes les utilisations en raison de leur caractère déformable et non rigide.

Il existe par ailleurs des dispositifs de raccordement de type coude multi angles sous forme d'un, deux, trois ou quatre modules coudés à emboiter permettant d'obtenir quatre angles de courbures prédéterminés entre 22 et 87° avec un raccordement mâle - femelle. Néanmoins de tels dispositifs ne permettent pas une adaptation sur mesure aux contraintes géométriques et de raccordement du réseau.

### Résumé de l'invention

L'invention concerne un dispositif selon la revendication 1.

Ledit intervalle angulaire régulier peut être compris entre 1 et 20°, de préférence entre 2 et 15°, de manière très préférée entre 5 et 10°.

Ledit module B peut comprendre un indicateur d'alignement (6), sur la totalité de la longueur du module, coupant perpendiculairement les graduations ou les bords extérieurs des anneaux cylindriques.

Ledit module B peut être complété d'un module C (10) comprenant un premier manchon cylindrique courbe (11) dont l'embout, mâle ou femelle, est apte à coulisser sur le module B pour y être fixé par vissage, collage, chauffage, emboitement ou tout autre procédé de liaison, et un deuxième manchon cylindrique et fixe (12) apte à se connecter sur une ouverture ou un réseau au moyen d'un embout (13), mâle ou femelle.

Ledit module C peut comprendre un indicateur d'alignement (15).

Ledit module B peut comprendre une butée (14) à la base de chaque anneau cylindrique.

Le dispositif de raccordement selon l'invention peut comprendre un module A comprenant un manchon (2), muni d'un embout mâle ou femelle (1), apte à se connecter sur le module B d'un côté et sur une ouverture ou un réseau quelconque de l'autre.

Le matériau du dispositif de raccordement selon l'invention peut être choisi parmi les matériaux suivants : polychlorure de vinyle (PVC), polypropylène (PP), polyethylène (PE), polyfluorure de Vinylidène (PVDF), polyoléfine, fibre, fibre-ciment, grès, béton, zinc, acier, aluminium, cuivre, alliages métalliques, Résines, pris seuls ou en mélange, de préférence parmi polychlorure de Vinyle (PVC), polypropylène (PP), polyethylène (PE), fibre, fibre-ciment, grès, béton, zinc, acier, aluminium, alliages métalliques, résines, de manière très préférée le matériau est le polychlorure de vinyle (PVC).

Le diamètre extérieur nominal dudit dispositif peut être compris entre 10 et 2000 mm, de manière préférée entre 20 et 1000 mm, de manière très préférée entre 32 et 630 mm.

L'invention concerne également l'utilisation du dispositif de raccordement selon l'une quelconque de ses variantes pour le transport de gaz, liquides ou éléments solides.

### Liste des figures

**[****Fig 1****]**

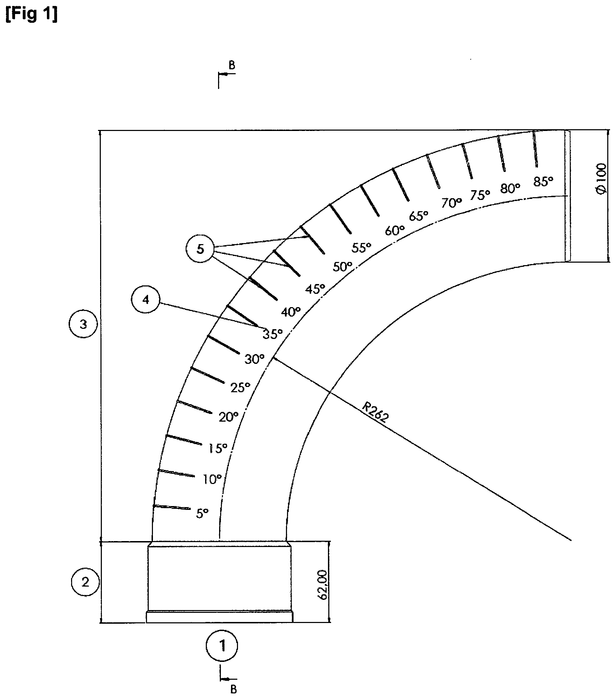

   La figure 1 représente une vue longitudinale d'un dispositif dans un exemple de réalisation associant un module courbé B1 et un module A avec un embout femelle.
[Fig 2]

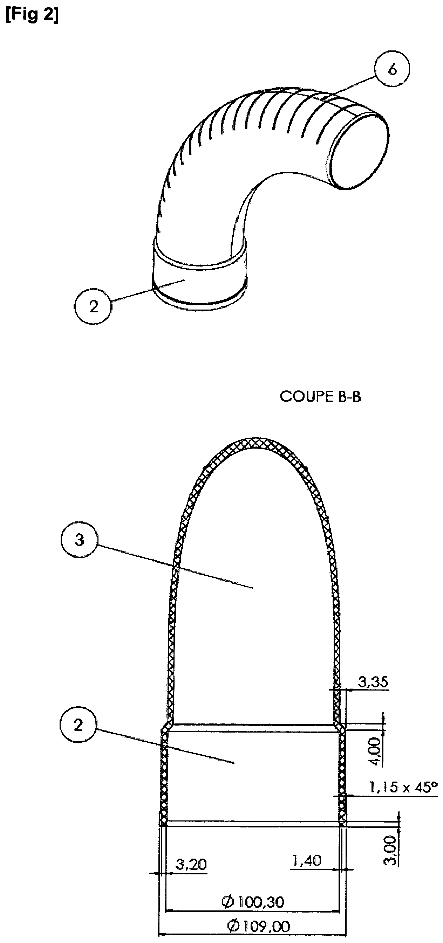

   La figure 2 représente une vue en 3D (en haut) et une vue en coupe transversale B-B (en bas) d'un dispositif dans un exemple de réalisation associant un module courbé B1 et un module A avec un embout femelle.
[Fig 3]

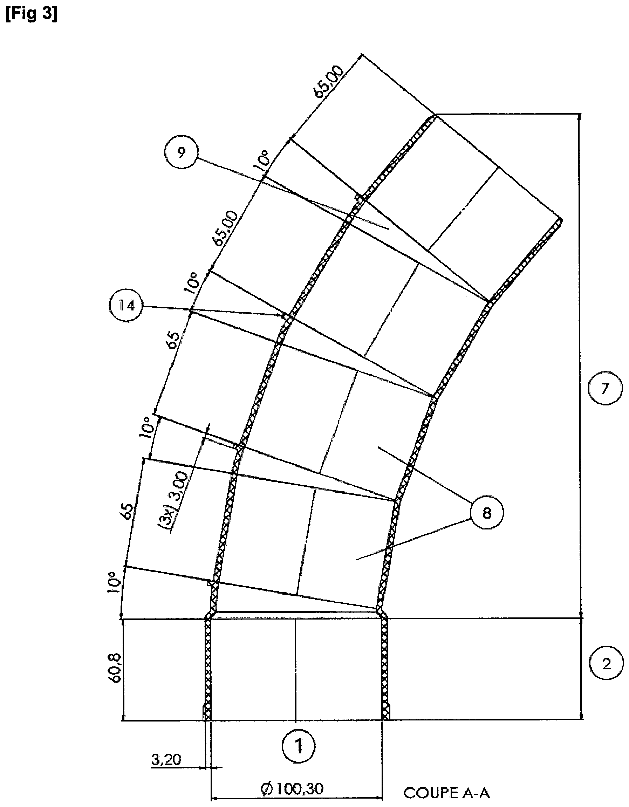

   La figure 3 représente une vue en coupe longitudinale A-A du dispositif selon l'invention dans un exemple de réalisation associant un module courbé B2 et un module A avec un embout femelle.
[Fig 4]

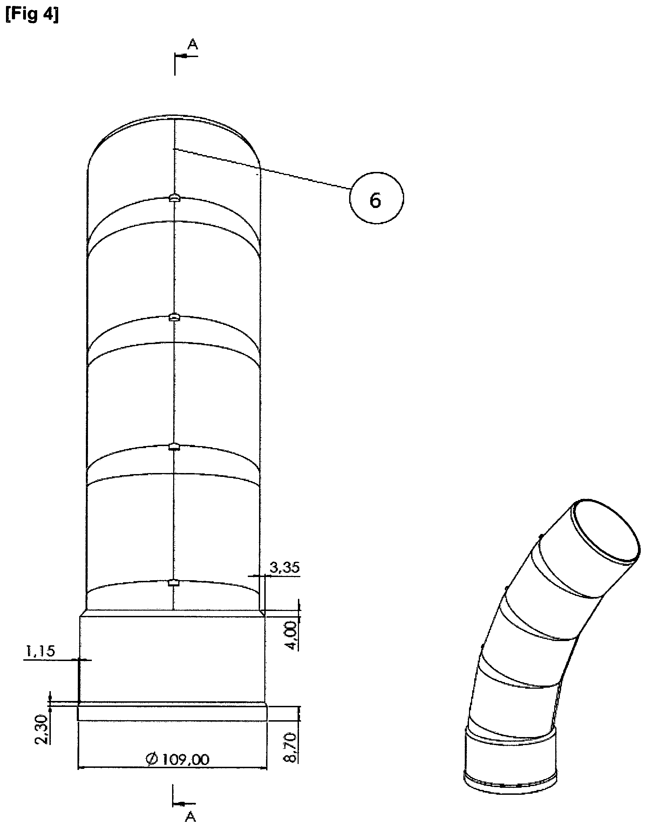

   La figure 4 représente une vue transversale (image de gauche) et une vue 3D (image de droite) du dispositif selon l'invention dans un exemple de réalisation associant un module courbé B2 et un module A avec un embout femelle.
[Fig 5]

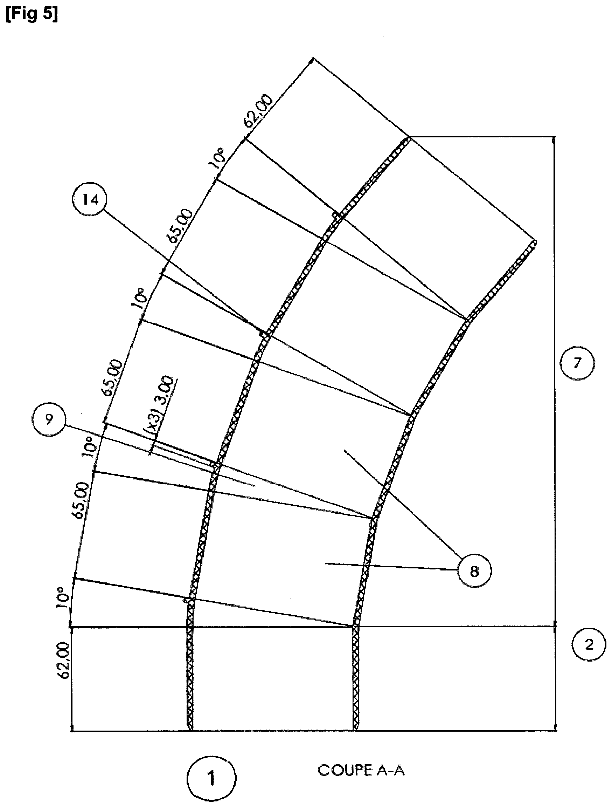

   La figure 5 représente une vue en coupe longitudinale A-A du dispositif selon l'invention dans un exemple de réalisation associant un module courbé B2 et un module A avec un embout mâle.
[Fig 6]

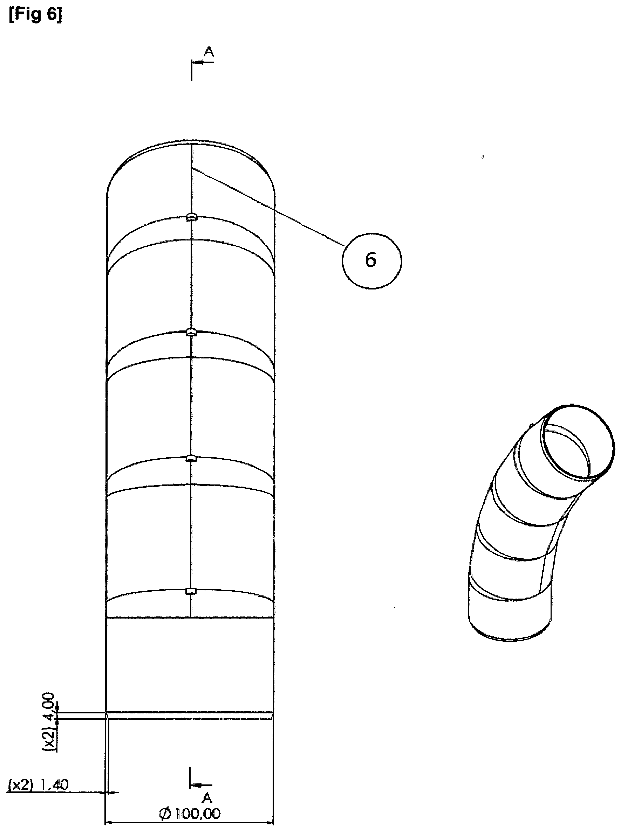

   La figure 6 représente une vue transversale (image de gauche) et une vue 3D (image de droite) du dispositif selon l'invention dans un exemple de réalisation associant un module courbé B2 et un module A avec un embout mâle.
[Fig 7]

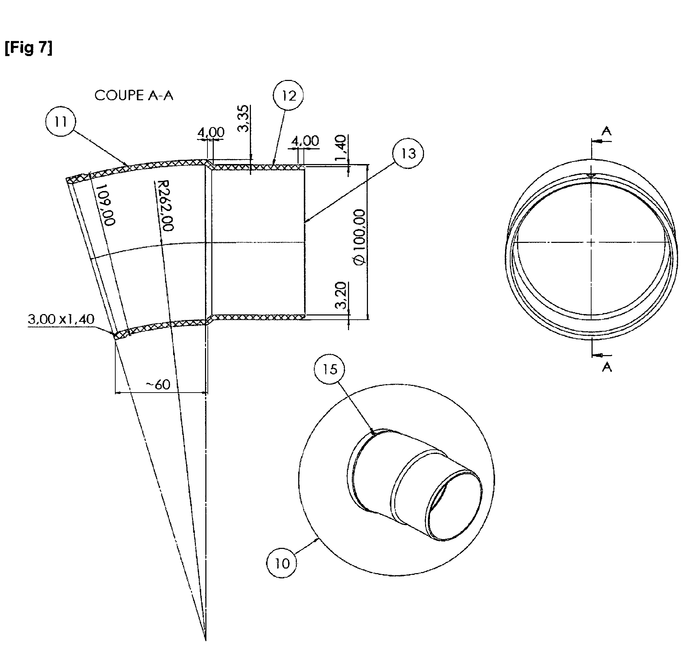

   La Figure 7 représente une vue en coupe longitudinale A-A, une vue transversale et une vue 3D du module C du dispositif selon l'invention.

D'autres caractéristiques et avantages du dispositif selon l'invention, apparaîtront à la lecture de la description ci-après d'exemples non limitatifs de réalisations, en se référant aux figures annexées et décrites ci-après.

### Description des modes de réalisation

L'invention concerne un dispositif de raccordement amélioré, également dénommé ci-après « coude multi-angles », permettant notamment le raccordement avec un tuyau de canalisation et présentant l'avantage d'être sécable à intervalles angulaires réguliers afin de former un coude cylindrique courbé d'angle choisi par l'utilisateur final, de préférence compris entre 0 et 180°, de manière très préférée entre 0 et 90°.

Le dispositif selon l'invention peut comprendre un ou plusieurs modules creux, destinés à être reliés avec d'autres éléments de canalisation ou de transport ou entre eux par vissage, collage, chauffage, emboitement ou tout autre procédé de liaison, selon l'angle choisi par l'utilisateur. Le dispositif selon l'invention peut être décliné dans n'importe quelle matière, épaisseur, section ou diamètre connus de l'homme du métier.

Le diamètre extérieur nominal du dispositif de raccordement selon l'invention également appelé coude multi-angles peut être adapté à l'application visée.

De manière préférée, mais non limitative, dans le domaine du bâtiment notamment, le diamètre extérieur nominal du dispositif de raccordement est compris entre 10 et 2000 mm, de manière très préférée entre 20 et 1000 mm, de manière encore plus préférée entre 32 et 630 mm.

Le matériau du dispositif de raccordement selon l'invention peut être choisi parmi les matériaux suivants : polychlorure de vinyle (PVC), polypropylène (PP), polyethylène (PE), polyfluorure de Vinylidène (PVDF), polyoléfine, fibre, fibre-ciment, grès, béton, zinc, acier, aluminium, cuivre, alliages métalliques, résines, pris seuls ou en mélange.

De manière préférée le matériau du dispositif de raccordement selon l'invention peut être choisi parmi polychlorure de vinyle (PVC), polypropylène (PP), polyethylène (PE), fibre, fibre-ciment, grès, béton, zinc, acier, aluminium, alliages métalliques, résines.

De manière très préférée, le matériau est le polychlorure de vinyle (PVC).

Le tableau 1 ci-dessous décrit des exemples non limitatifs de réalisation du dispositif de raccordement selon l'invention pour trois applications : un dispositif de raccordement en PVC compact (entre 32 et 200 mm), un dispositif de raccordement en PVC multicouches (entre 110 et 1000 mm), un dispositif de raccordement pour des tubes PVC de type télécommunications adaptés au passage d'une fibre optique (entre 28 et 100 mm). Le tableau 1 présente différents diamètres extérieurs nominaux (en mm) pour les trois exemples de dispositif de raccordement selon l'invention.

**[Table 1]**

| | | | |
|---|---|---|---|
| | PVC Compact | PVC Multicouches | Tubes PVC Télécom Fibre optique |
| Diamètre extérieur nominal en mm | 32 | 110 | 28 |
| | 40 | 125 | 33 |
| | 50 | 140 | 45 |
| | 63 | 160 | 60 |
| | 75 | 200 | 80 |
| | 80 | 250 | 100 |
| | 90 | 315 | |
| | 100 | 400 | |
| | 110 | 500 | |
| | 125 | 630 | |
| | 140 | 710 | |
| | 160 | 800 | |
| | 200 | 1000 | |

Le dispositif de raccordement comporte un module B courbé de gradation angulaire avantageusement comprise entre 0 et 180°, de préférence entre 0 et 90°, sensiblement cylindrique, pouvant être sectionné à l'angle choisi par l'utilisateur final, en association éventuelle avec un ou deux autres modules A et C.

Les Modules A, B, ou C peuvent disposer d'embout mâle ou femelle. « L'embout mâle » désigne une extrémité de diamètre inférieur au diamètre de l'extrémité sur laquelle elle peut être connectée, par tous moyens.

« L'embout femelle » désigne une extrémité de diamètre supérieur au diamètre de l'extrémité sur laquelle elle peut être connectée, par tous moyens.

Par diamètre extérieur nominal du dispositif, on fait référence au diamètre extérieur nominal du module B courbé, hors manchons et embouts.

Les modules A, B et C sont décrits ci-dessous, en faisant référence aux figures 1 à 7.

### Module A

Le module A, optionnel, peut se connecter en premier lieu sur une ouverture ou un réseau quelconque préexistant (canalisations, joints, gouttières, aérations, tubes ou flexibles etc.). Le module A comprend un manchon cylindrique (2), muni d'un embout mâle ou femelle (1), lui permettant de se raccorder à l'endroit où il doit être placé. Le manchon (2) du module A est avantageusement rectiligne et fixe, et peut être fabriqué dans les matières et aux diamètres nominaux cités précédemment.

### Module B

Le Module B est un module courbé cylindrique sécable à l'angle désiré et à cet effet il comprend des moyens pour déterminer des sections de coupe transversale à intervalles angulaires réguliers audit angle de courbure choisi. La forme globale du module B est sensiblement assimilable à une portion de tore de 0 à 180°, le module B pouvant être formé d'éléments annelés successifs ou être formé d'un seul bloc. Le module B comprend notamment deux variantes B1 et B2.

### Module B1

Le module B1 (3), représenté sur les figures 1 et 2, débute par un embout mâle ou femelle (1) et peut se connecter par vissage, collage, chauffage, emboitement ou tout autre procédé au manchon (2) du module A ou directement à tout autre élément de canalisation ou tuyau. En prolongement de l'embout, le module B1 est courbé progressivement de 0 à 180°, de préférence de 0 à 90°.

Les indications de degrés, légendées (4), sont graduées sur le Module B1, sous forme de traits rectilignes ou graduations (5), à intervalles de degrés réguliers, par exemple et de préférence tous les 5°, permettant de visualiser l'angle de section afin que le module puisse être coupé selon l'angle désiré.Un indicateur d'alignement (6), par exemple sous forme d'un trait visible sur la Figure 2, peut figurer sur la totalité de la longueur du module, coupant perpendiculairement chacun des traits rectilignes des graduations, permettant ainsi de visualiser un angle de section. Cet indicateur d'alignement est destiné à permettre au module B1 de se connecter à tout autre module, au module C, comme au module A, en s'emboitant dans l'un comme dans l'autre, sans créer de brèche d'étanchéité dans le réseau considéré.

De préférence, l'intervalle angulaire entre les graduations est compris entre 1 et 20°, de préférence entre 5 et 10° bornes incluses, afin de permettre une adaptabilité suffisante aux contraintes du raccordement. Ledit module B1 peut être fabriqué dans les matières et aux diamètres nominaux cités précédemment.

### Module B2

Le module B2 (7) représenté sur les Figures 3 et 5, débute par un embout mâle (figure 5) ou femelle (figure 3). Il peut se connecter par vissage, collage, chauffage, emboitement ou tout autre procédé au manchon (2) du module A ou directement à tout autre élément de canalisation, tuyau, etc... En prolongement de l'embout, le Module B2 présente une courbure progressive, pouvant aller de 0 à 180°, de préférence de 0 à 90°.

Le Module B2 est composé d'éléments annelés cylindriques (8) (ou anneaux cylindriques), avantageusement de largeur sensiblement identique, lesdits anneaux cylindriques successifs étant espacés deux à deux par des éléments de liaison annelés (9), dont la projection dans le plan de coupe longitudinal s'apparente à un triangle isocèle de base sensiblement rectiligne. La longueur de la base de chaque triangle, et donc l'angle au sommet de chaque triangle isocèle, permet de déterminer un intervalle angulaire entre chacun des anneaux. Pour un raccordement assurant une étanchéité complète, chaque élément annelé cylindrique peut être muni d'une butée (14), à la base de chacun desdits éléments annelés cylindriques.

De préférence, l'intervalle angulaire est compris entre 1 et 20°, de préférence entre 5 et 10° bornes incluses, afin de permettre une adaptabilité suffisante aux contraintes du raccordement. Le nombre d'anneaux cylindriques du module B2 est avantageusement supérieur à 2, par exemple peut être égal 4 ou plus.

Un indicateur d'alignement (6), par exemple sous forme d'un trait visible sur les Figures 4 et 6, peut figurer sur la totalité de la longueur du module pour permettre au module B1 de faciliter la connexion à tout autre module, au module C, comme au module A, en s'emboitant dans l'un comme dans l'autre, sans créer de brèche d'étanchéité dans le réseau considéré.

Ledit module B2, par sa conception modulaire présente l'avantage supplémentaire que sa structure permet de fabriquer un module courbé selon un angle différent de 90°. Ledit module B2 peut également être utilisé sans le module C.

Ledit module B2 peut être décliné dans n'importe quelle matière, épaisseur, section ou diamètre.

### Module C

Le module C (10), représenté sur la figure 7, peut compléter l'utilisation du Module B, notamment dans le mode de réalisation avec le module B1.

Ledit module C se compose de deux parties :
- Un manchon cylindrique courbe (11) dont l'embout, mâle ou femelle est adapté au diamètre du module B. Ce manchon coulisse sur le module B afin de s'y fixer, et ce par vissage, collage, chauffage, emboitement ou tout autre procédé de liaison. Pour un emboitement étanche au module B, un repère d'alignement (15), peut être embossé sur le bord.
- Un manchon cylindrique rectiligne et fixe (12) apte à se connecter sur une ouverture ou un réseau quelconque (canalisations, joints, gouttières, aérations, tubes ou flexibles préexistants, etc.). Ce manchon a un embout (13), mâle ou femelle, lui permettant de se raccorder à l'endroit où il doit être placé.

Ledit module C peut être fabriqué dans les matières et aux diamètres nominaux cités précédemment.

Utilisation du dispositif selon l'invention :
Le module B1 du dispositif de raccordement selon l'invention est destiné à être sectionné par tout moyen à la gradation angulaire désirée, afin de pouvoir mettre en oeuvre un passage permettant notamment le transport de fluides, de gaz ou de solides de type filaire, sans causer de distorsion, de frottement, de réchauffement, de pincement ou tout autre type d'interruptions ou de difficultés dans ledit transport. Ces interruptions ou difficultés sont en effet source de sinistres ou de réduction de performances (notamment points chauds, incendies, engorgements, réduction non sollicitée du débit d'approvisionnement).

Le module B2 du dispositif de raccordement selon l'invention est destiné à être sectionné uniquement entre les anneaux cylindriques, et ce par tout moyen. La gradation angulaire de coupe est prédéterminée par la géométrie du module B2. La coupe s'effectue au ras des éléments annelés de liaison, à la jonction avec les anneaux cylindriques. Cela permet d'obtenir l'angle désiré afin de pouvoir mettre en œuvre un passage permettant notamment le transport de fluides, de gaz ou de solides de type filaire, sans causer de distorsion, de frottement, de réchauffement, de pincement ou tout autre type d'interruptions ou de difficultés dans ledit transport. Ces interruptions ou difficultés sont en effet source de sinistres ou de réduction de performances (notamment points chauds, incendies, engorgements, réduction non sollicitée du débit d'approvisionnement).

Les embouts du module B2 permettent de connecter directement ce dernier à une ouverture ou un réseau quelconque (canalisations, joints, gouttières, aérations, tubes ou flexibles préexistants, etc.) sans nécessairement utiliser le Module C.

Dans toutes ses variantes, le coude multi-angles selon l'invention peut être assemblé aux éléments à raccorder (tuyaux, conduites, etc.) par collage, serrage, emboîtement ou tout autre moyen permettant d'assurer un bon assemblage et une bonne étanchéité. Dans le cas du serrage, le dispositif selon l'invention peut être muni d'un ou de plusieurs joints montés sur bagues ou non, logés dans une ou des gorges.

Le dispositif de raccordement selon l'invention peut être fabriqué dans différentes épaisseurs pour se conformer aux différentes classes de rigidité et normes, et également pour assurer la compatibilité entre les différentes classes de rigidité des tubes et raccords.

On ne sortirait pas du cadre de l'invention en utilisant un ou plusieurs modules B comprenant des intervalles angulaires différents par portions de courbe, afin de permettre un ajustement optimisé aux contraintes du raccordement.

### Exemples

### Exemple 1

Un exemple non limitatif de réalisation d'un dispositif de raccordement selon l'invention, pour une canalisation en PVC de diamètre nominal 100 mm, dans la variante B1 est décrit ci-dessous, en référence aux Figures 1 et 2.

Le coude multi-angles comporte dans cet exemple trois modules creux A, B1 et C d'épaisseur 3,20 mm, comme suit :
Le module B1 débute par un embout femelle de forme cylindrique rectiligne (1).

L'embout du manchon supplémentaire A (2) permet de raccorder le module directement à un tuyau de canalisation.

En prolongement de l'embout, le diamètre du tube se réduit pour devenir mâle, correspondant au diamètre nominal de la canalisation (100 mm). Cette partie mâle se prolonge en formant une courbe allant de 0 à 90°, avec un rayon de courbure de 262 mm. Le premier module B1 peut donc être coupé n'importe où sur la partie mâle courbe graduée (3). Les repères sont marqués ou incrustés dans la masse : les degrés (4) avec un intervalle angulaire de 5°, les repères de coupe (5) à l'équerre, le repère (6) du bon alignement pour l'assemblage avec le module C qui lui aussi peut être muni d'un repère (15).

Le module C décrit sur la figure 7 débute par un embout femelle, sous forme d'un manchon de forme courbe (11), ayant avantageusement le même rayon de courbure que le module B1, apte à coulisser sur la partie courbe mâle du module B1.

En prolongement de l'embout courbe (11), le diamètre du tube se réduit pour devenir mâle, puis il se prolonge en cylindre rectiligne mâle (12) dont l'extrémité est chanfreinée ou pas, pouvant ainsi recevoir un nouveau tube prémanchonné dans un premier mode de réalisation, ou non prémanchonné dans un deuxième mode de réalisation.

### Exemple 2

Un exemple non limitatif de réalisation d'un dispositif de raccordement selon l'invention, pour une canalisation en PVC de diamètre nominal 100 mm, dans la variante B2 est décrit ci-dessous (Figure 3).

Le coude multi-angles comporte dans cet exemple deux modules A et B2 creux d'épaisseur 3,20 mm, comme suit :
La module B2 (7) débute par un embout (1) femelle de forme cylindrique rectiligne, de largeur 62 mm. L'embout du manchon (2) permet de raccorder le module directement à un tuyau de canalisation.

En prolongement de l'embout, le diamètre du tube se réduit pour devenir mâle, correspondant au diamètre nominal de la canalisation (100 mm). Cette partie mâle (7) formée d'une alternance d'anneaux cylindriques (8) séparés par des éléments de liaison annelés (9) créant des sections de coupe, forme une courbe débutant par un élément de liaison annelé, déterminant un intervalle angulaire de 10° avec l'embout (1), un premier anneau cylindrique de largeur 65 mm, puis un deuxième élément annelé de liaison déterminant le même intervalle angulaire de 10°, un deuxième anneau cylindrique de largeur 65 mm, un troisième élément annelé de liaison déterminant le même intervalle angulaire de 10°, un troisième anneau cylindrique de largeur 65 mm , un quatrième élément annelé de liaison déterminant le même intervalle angulaire de 10°, puis un quatrième et dernier anneau cylindrique de largeur 65 mm.

Chaque anneau cylindrique est muni d'une butée (14) de 3 mm.

Le coude multi-angles dans cet exemple est fabriqué pour former un angle inférieur à 90° et peut être sectionné si nécessaire au ras de chaque anneau cylindrique pour former un angle encore inférieur, au choix de l'utilisateur.

## Revendications

1. Dispositif de raccordement rigide pour le transport de fluides ou de composés solides filaires comprenant au moins un embout (1) mâle ou femelle et un module sensiblement cylindrique B (3 ou 7) courbé jusqu'à 180°, de préférence jusqu'à 90°, **caractérisé en ce que** ledit module B est sécable par tout moyen à un angle de courbure choisi et **en ce que** ledit module B comprend des moyens pour déterminer des sections de coupe transversale à intervalle angulaire régulier audit angle de courbure choisi, ledit module B comprenant une alternance d'anneaux cylindriques (8) séparés deux à deux par des éléments de liaison annelés (9) identiques dont la projection dans le plan longitudinal est un triangle isocèle, les bords extérieurs desdits éléments de liaison créant lesdites sections de coupe transversale à intervalle angulaire régulier (module B2,7).

2. Dispositif de raccordement selon la revendication 1 dans lequel ledit intervalle angulaire régulier est compris entre 1 et 20°, de préférence entre 2 et 15°, de manière très préférée entre 5 et 10°.

3. Dispositif de raccordement selon l'une des revendications précédentes dans lequel le module B comprend un indicateur d'alignement (6), sur la totalité de la longueur du module, coupant perpendiculairement les graduations ou les bords extérieurs des anneaux cylindriques.

4. Dispositif de raccordement selon l'une des revendications précédentes, dans lequel le module B est complété d'un module C (10) comprenant un premier manchon cylindrique courbe (11) dont l'embout, mâle ou femelle, est apte à coulisser sur le module B pour y être fixé par vissage, collage, chauffage, emboitement ou tout autre procédé de liaison, et un deuxième manchon cylindrique et fixe (12) apte à se connecter sur une ouverture ou un réseau au moyen d'un embout (13), mâle ou femelle.

5. Dispositif de raccordement selon la revendication 4 dans lequel ledit module C comprend un indicateur d'alignement (15).

6. Dispositif de raccordement selon l'une des revendications précédentes dans lequel ledit module B comprend une butée (14) à la base de chaque anneau cylindrique.

7. Dispositif de raccordement selon l'une des revendications précédentes comprenant un module A comprenant un manchon (2), muni d'un embout mâle ou femelle (1), apte à se connecter sur le module B d'un côté et sur une ouverture ou un réseau quelconque de l'autre.

8. Dispositif de raccordement selon l'une des revendications précédentes dont le matériau est choisi parmi les matériaux suivants : polychlorure de vinyle (PVC), polypropylène (PP), polyethylène (PE), polyfluorure de Vinylidène (PVDF), polyoléfine, fibre, fibre-ciment, grès, béton, zinc, acier, aluminium, cuivre, alliages métalliques, Résines, pris seuls ou en mélange, de préférence parmi polychlorure de Vinyle (PVC), polypropylène (PP), polyethylène (PE), fibre, fibre-ciment, grès, béton, zinc, acier, aluminium, alliages métalliques, résines, de manière très préférée le polychlorure de vinyle (PVC).

9. Dispositif de raccordement selon l'une des revendications 1 à 8 dans lequel le diamètre extérieur nominal dudit dispositif est compris entre 10 et 2000 mm, de manière très préférée entre 20 et 1000 mm, de manière encore plus préférée entre 32 et 630 mm.

10. Utilisation du dispositif de raccordement selon l'une quelconque des revendications 1 à 9 pour le transport de gaz, liquides ou éléments solides.

## Patentansprüche

1. Starres Verbindungselement zum Transport von Fluiden oder fadenförmigen Feststoffen, umfassend mindestens einen männlichen oder weiblichen Anschluss (1) und ein im Wesentlichen zylindrisches Modul B (3 oder 7), das bis zu 180°, vorzugsweise bis zu 90°, gekrümmt ist, **dadurch gekennzeichnet, dass** das Modul B mit beliebigen Mitteln an einem gewählten Krümmungswinkel trennbar ist und dass das Modul B Mittel aufweist, um Querschnittsschnitte in regelmäßigen Winkelintervallen bei dem gewählten Krümmungswinkel zu bestimmen, wobei das Modul B eine Abfolge von zylindrischen Ringen (8) umfasst, die paarweise durch identische, ringförmige Verbindungselemente (9) getrennt sind, deren Projektion in der Längsebene einem gleichschenkligen Dreieck entspricht, wobei die Außenkanten der Verbindungselemente die genannten Querschnittsschnitte in regelmäßigen Winkelintervallen bilden (Modul B2, 7).

2. Verbindungselement nach Anspruch 1, **dadurch gekennzeichnet, dass** das regelmäßige Winkelintervall zwischen 1° und 20°, vorzugsweise zwischen 2° und 15° und besonders bevorzugt zwischen 5° und 10° liegt.

3. Verbindungselement nach einem der vorhergehenden Ansprüche, **dadurch gekennzeichnet, dass** das Modul B eine Ausrichtungsmarkierung (6) über die gesamte Länge des Moduls aufweist, die die Markierungen oder Außenkanten der zylindrischen Ringe rechtwinklig schneidet.

4. Verbindungselement nach einem der vorhergehenden Ansprüche, **dadurch gekennzeichnet, dass** das Modul B durch ein Modul C (10) ergänzt ist, das einen ersten gekrümmten zylindrischen Mantel (11) umfasst, dessen männlicher oder weiblicher Anschluss auf dem Modul B gleitend befestigbar ist, um dort durch Verschrauben, Verkleben, Erwärmen, Aufstecken oder ein anderes Verbindungsmittel fixiert zu werden, und einen zweiten geraden zylindrischen Mantel (12), der mittels eines Anschlusses (13), männlich oder weiblich, mit einer Öffnung oder einem Netz verbindbar ist.

5. Verbindungselement nach Anspruch 4, **dadurch gekennzeichnet, dass** das Modul C eine Ausrichtungsmarkierung (15) aufweist.

6. Verbindungselement nach einem der vorhergehenden Ansprüche, **dadurch gekennzeichnet, dass** das Modul B an der Basis jedes zylindrischen Rings einen Anschlag (14) aufweist.

7. Verbindungselement nach einem der vorhergehenden Ansprüche, **dadurch gekennzeichnet, dass** es ein Modul A umfasst, das einen Mantel (2) mit einem männlichen oder weiblichen Anschluss (1) aufweist, der einerseits mit dem Modul B und andererseits mit einer Öffnung oder einem beliebigen Netz verbindbar ist.

8. Verbindungselement nach einem der vorhergehenden Ansprüche, **dadurch gekennzeichnet, dass** das Material aus der Gruppe ausgewählt ist, die Polyvinylchlorid (PVC), Polypropylen (PP), Polyethylen (PE), Polyvinylidenfluorid (PVDF), Polyolefin, Faser, Faserzement, Steinzeug, Beton, Zink, Stahl, Aluminium, Kupfer, Metalllegierungen und Harze, jeweils einzeln oder in Mischung, umfasst, vorzugsweise Polyvinylchlorid (PVC), Polypropylen (PP), Polyethylen (PE), Faser, Faserzement, Steinzeug, Beton, Zink, Stahl, Aluminium, Metalllegierungen oder Harze, und besonders bevorzugt Polyvinylchlorid (PVC).

9. Verbindungselement nach einem der Ansprüche 1 bis 8, **dadurch gekennzeichnet, dass** der äußere Nenndurchmesser des Verbindungselements zwischen 10 mm und 2000 mm liegt, besonders bevorzugt zwischen 20 mm und 1000 mm und noch bevorzugter zwischen 32 mm und 630 mm.

10. Verwendung des Verbindungselements nach einem der Ansprüche 1 bis 9 zum Transport von Gasen, Flüssigkeiten oder festen Elementen.

## Claims

1. Rigid connecting device for the transport of fluids or filamentary solid materials, comprising at least one male or female end piece (1) and a substantially cylindrical module B (3 or 7) curved up to 180°, preferably up to 90°, **characterised in that** said module B is divisible by any means at a selected curvature angle, and **in that** said module B comprises means for determining transverse cutting sections at regular angular intervals corresponding to the selected curvature angle, said module B comprising an alternation of cylindrical rings (8) separated in pairs by identical annular linking elements (9), the projection of which in the longitudinal plane is an isosceles triangle, the outer edges of said linking elements creating said transverse cutting sections at regular angular intervals (module B2,7).

2. Connecting device according to claim 1, wherein said regular angular interval is between 1° and 20°, preferably between 2° and 15°, and more preferably between 5° and 10°.

3. Connecting device according to any one of the preceding claims, wherein module B comprises an alignment indicator (6) extending over the entire length of the module, intersecting perpendicularly with the graduations or the outer edges of the cylindrical rings.

4. Connecting device according to any one of the preceding claims, wherein module B is completed by a module C (10) comprising a first curved cylindrical sleeve (11), the male or female end of which is able to slide onto module B so as to be fixed thereto by screwing, gluing, heating, fitting, or any other coupling method, and a second rectilinear and fixed cylindrical sleeve (12) adapted to connect to an opening or a network by means of an end piece (13), male or female.

5. Connecting device according to claim 4, wherein said module C comprises an alignment indicator (15).

6. Connecting device according to any one of the preceding claims, wherein module B comprises a stop (14) at the base of each cylindrical ring.

7. Connecting device according to any one of the preceding claims, comprising a module A, said module A comprising a sleeve (2) provided with a male or female end piece (1), adapted to connect on one side to module B and on the other side to any opening or network.

8. Connecting device according to any one of the preceding claims, wherein the material is selected from the following: polyvinyl chloride (PVC), polypropylene (PP), polyethylene (PE), polyvinylidene fluoride (PVDF), polyolefin, fibre, fibre cement, stoneware, concrete, zinc, steel, aluminium, copper, metal alloys, resins, taken alone or in combination; preferably PVC, PP, PE, fibre, fibre cement, stoneware, concrete, zinc, steel, aluminium, metal alloys, or resins, and most preferably polyvinyl chloride (PVC).

9. Connecting device according to any one of claims 1 to 8, wherein the nominal outer diameter of said device is between 10 and 2000 mm, more preferably between 20 and 1000 mm, and even more preferably between 32 and 630 mm.

10. Use of the connecting device according to any one of claims 1 to 9 for the transport of gases, liquids, or solid elements.
